(19) Europäisches Patentamt
European Patent Office
Office européen des brevets

(11) Publication number: **0 199 669 B1**

(12) **EUROPEAN PATENT SPECIFICATION**

(45) Date of publication of patent specification:
**08.01.92 Bulletin 92/02**

(51) Int. Cl.⁵: **F16K 7/04, E21B 21/10, E21B 21/08**

(21) Application number: **86730065.9**

(22) Date of filing: **11.04.86**

(54) **Choke valve especially used in oil and gas wells.**

(30) Priority: **11.04.85 DK 1628/85**

(43) Date of publication of application:
**29.10.86 Bulletin 86/44**

(45) Publication of the grant of the patent:
**08.01.92 Bulletin 92/02**

(84) Designated Contracting States:
**AT BE CH DE FR GB IT LI LU NL SE**

(56) References cited:
**GB-A- 642 070**
**GB-A- 1 279 760**
**US-A- 3 090 591**
**US-A- 3 479 001**
**US-A- 3 646 607**
**US-A- 4 137 933**
**US-A- 4 317 557**

(73) Proprietor: **Dyhr, Einar**
**Skodsborgvej 160**
**DK-2840 Holte (DK)**

(72) Inventor: **Dyhr, Einar**
**Skodsborgvej 160**
**DK-2840 Holte (DK)**

(74) Representative: **Raffnsoee, Knud Rosenstand et al**
**Internationalt Patent-Bureau Hoeje Taastrup Boulevard 23**
**DK-2630 Taastrup (DK)**

## Description

The invention relates to a flow control valve for use in a pipeline for abrasive fluids, in particular as an emergency choke valve for controlling the flow volume and back pressure of liquid or gas in case of gas kicks or blow-outs when drilling through shallow gas bearing formations from an off-shore drilling platform, comprising a valve housing with inlet and outlet joints for connection with pipe line sections, a resiliently deformable cylindrical valve element arranged in said housing with a first end facing said inlet joint and a second end facing said outlet joint and means acting on the external side of said valve element to provide a controlable radial constriction in a constriction zone at said second end of the valve element for reducing the flow area of the valve, the valve element being substantially tubular in its unstressed condition and being arranged in the valve housing with its inner side directly facing the flow passage.

From GB-A-1279760 a flow control valve of this kind is known for use in connection with hydraulic cyclones and other slurry handling devices.

Whereas the present invention is concerned in general with flow control valves for abrasive fluids it is a principal object of the invention to provide a flow control valve which is particularly suitable for use as an emergency choke valve in connection with off shore oil and gas drilling platforms under the circumstances mentioned above.

Drilling off-shore is done from platforms. As platforms the so-called jack-up rig, which is a platform supported by legs standing on the sea bed, or the so-called semi-submersibles, which are floating platforms, or drill ships, which are conventional ships rigged with drilling equipment, can be used.

In brief, an off-shore well is made by drilling a section of the hole, lining the section with a casing, then drilling a smaller hole which is lined with the casing etc. The casing is cemented in the formation. During the drilling, mud is circulated through the drill pipe up through the angles with the purpose of removing the cuttings as well as imposing a hydrostatic pressure equal to that existing in the geological formation outside.

This is all a well-known procedure, and if a so-called gas or oil influx is taken from hydro cup and deposits due to an unbalance in the hydrostatic head, then the rig personnel will use certain well-established procedures and equipment to deal with the problem.

If on the other hand, the gas kick occurs in the upper geological formation the situation can become very serious.

During the 25 years or so when the industry has been drilling off-shore, there has been no real satisfactory solution to control shallow gas kicks.

The risk of drilling through shallow gas sands has been reduced by the use of high resolution seismics, wherein the presence of so-called bright-spots will indicate the presence of shallow gas. This knowledge, however, does not always keep an oil company from drilling a particular location. The reason for this can be, that the signals are too weak to be absolutely sure of shallow gas, or because the target zones are so important that the goal overshadows the risk of encountering shallow gas.

The reason can be that the use of high resolution seismic is prohibitively expensive or because neighbouring wells have shown only normal pressure formations.

The casing depth can be changed to suit the actual formation, but very little can be done to improve the strength of the 508 mm (20 inch) casing strength against vertical fracture from the abnormal pressure zones or a too high hydrostatic pressure imposed from the surface.

It is well-known that shallow gas is most dangerous in the upper section of the hole, which is lined with a 508 mm (20 inch) casing in front of the 340 mm 13-3/8 inch) casings.

The reason for this is that the conductor pipe and the 609,6 cm (20 feet) casing shoe (geological formation around the end of the casing) is unable to sustain a pressure gradient which exceeds 12,5-13,5 kPa/m (.55 - .60 psi per foot). Pressure which exceeds this will most likely cause the formation to fracture around the cement and will result in subsequent escape of the gas along the outside of the casing to the surface. If this happens the rig is in a danger.

In the case of a jack-up which is supported by the sea bed, the outflowing gas can erode the sea bed enough to cause the rig to turn over.

For floating platforms there is a danger of capsizing when the gas aerates the water round the rig.

There have been many such accidents in the drilling industry and it is an established procedure not to close the blow out preventer (BOP) during this phase of the drilling. A standard rule for off-shore drilling is to close the diverter valve and divert the gas overboard. But even with this procedure the shallow gas kick still causes disasters.

One of the most common reasons for shallow gas blow-out is drilling with too small a trip margin. It takes only very little swabing effect to cause the gas to enter the well bore. On the other hand, drilling with too large a margin will easily cause a surge of pressure to loosen drilling mud of the formation with subsequent loss of hydrostatic pressure.

The shallow gas will then move to the surface in a few seconds, taking the drilling crew by surprise. When the first gas buble has surfaced and displaced part of the mud column, with the resulting loss of hydrostatic pressure, unless the balancing hydrostatic pressure is established by replacing the loss, or by increasing the mud weight, or by applying back pressure on the well head, the well will flow out of control.

After having taken a kick it is a normal procedure to close the divertor and to start both mud pumps pumping into the hole. By increasing the hydrostatic head pressure the gas flow into the well bore will hopefully stop.

However, it is a question of what will happen if the well is unloading mud faster than it can be pumped into it. Depending on the rate of unloading, it can be impossible to re-establish a balancing hydrostatic pressure. Having closed the divertor on the well flowing out over the side, one can ony hope that the formation will breach itself or deplete before any damage is done to the divertor lines. But there is no guarantee that the flowing sand and gas will not come through the divertor lines or that the gas does not contain $H_2S$, which is very poisonous. On top of that, it is very likely that the gas will ignite. To prevent this the engines must be shut down, which will complicate the control process further.

In the process of controlling the well, the gas will most likely increase in velocity, carrying more sand along from the formation. This flow is extremely abrasive and can cut the divertor lines in minutes. If this happens the rig is in extreme danger and the personnel have to be evacuated. At this point, the BOPs, if they are installed, would have to be closed, thus stopping the gas flow and gaining time for the mixing of heavy mud and the repairing of the diverter lines.

Since there is no way to know whether the formation around the casing will withstand the pressure there is no other alternative than to try.

If the gas does not come up around the casing then the well can be killed by using a conventional kill procedure. But if, on the other hand, the gas does come around the casing, the blow out preventers (BOPs) must be opened again and the process of diversion must be continued. In the latter case, one can only hope that the gas will stop flowing around the casing. If this does not happen the rig must be prepared for abandonment. In the case of a floating rig, the procedure will be to cut the pipe and move the rig away by pulling on the anchor lines. In this case, the equipment damaged would be limited to the subside blow out preventer (BOP) and the well head. In the case of a jack-up, there is only a very slight chance of moving the rig. In most cases the rig will have to be abandoned.

As previously described, the incoming gas rises to the surface very quickly, displacing the drilling mud in the annulus. Since closing the blow out preventer (BOP) is not recommended, there is only the alternative left to pump drilling mud into the well with maximum pumping capacity. Whilst pumping, the gas will continue to enter the well bore until balancing of the hydrostatic head is established.

As is often the case, the incoming gas displaces a larger colume of drilling mud than can be replaced by the mud pumps. As an example, a 320 l (two barrel) gas influx at 460 m (1500') and 1 kg/l (9ppg) mud will expand to 16000 l (100 barrel) at the surface.

If such a kick is allowed to expand to the surface then, in theory, 83,8 m (275 feet) of the 508 mm (20 inch) annulus will vacate causing a 882.5 kPa (128 psi ) pressure drop in the hydrostatic head. Because of this reduction, more gas will enter the well bore and, if the incoming mud from the mud pumps continues to be less than the displaced mud, the hydrostatic pressure will be reduced to a point at which the incoming mud will be ejected with the gas, no matter how heavy it is. It is impossible to kill the well at this point.

The logical way to limit the gas expansion as it rises to the surface is to increase the surface pressure. In a normal kill procedure this is done by opening the high pressure choke valve enclosing the blow out preventers (BOPs) and then adjusting the choke valves to establish the desired back pressure. As it has already been established that in the top section of the hole it is dangerous to close the blow out preventers (BOPs), and as all wells are drilled without blow out preventers (BOPs) on the 914,4 mm (36 inch) casing and some wells are drilled without blow out preventers (BOPs) on the 508 mm (20 inch) casing and as high pressure choke valves do not have a sufficiently large choking diameter for venting shallow gas it is not possible to increase the surface pressure by using the conventional equipment.

If one could apply a back pressure on the surface then the gas expansion would be limited, causing a smaller hydrostatic pressure drop in the bottom of the hole. This could make it possible for the mud pumps to keep up with the mud displacement and, by pumping heavy mud into the well bore, could make it possible to regain the balancing head pressure. While it is important to refill the well with drilling mud, it is equally important not to break down the formation at the casing shoe.

Thus it is a particular object of the invention to provide a flow control valve, which acting as a choke valve can regulate the back pressure at the well head while flowing shallow gas, even when the choking process requires hours of flowing highly abrasive gas-/sand/mud mixture, without wearing ut the valve below its operating specifications. This is extremely important as it is impossible to perform any repair work during the choking process.

According to the invention, this problem is solved by designing the flow control valve of the kind mentioned such what in said unstressed condition the valve element has an internal diameter providing throughout its axial length a flow area at least equal to the remaining flow area of the valve and that means is provided for controlling said constriction means to displace said constriction zone axially towards said first end of the valve element to compensate for wear of said second end of the valve element when constricted. By displacing the constriction of the outlet end of the resiliently deformable tubular valve element towards the inlet end of the valve as abrasion proceeds, the length of the valve element will determine the life of the valve. As the valve element can be made substantially longer than its wall thickness, the valve can be given a substantially longer life than the well-known devices. Besides, except for the valve element, the interior parts of the valve are not essentially exposed to wear.

The displacement of the constriction zone of the flexible tubular valve element can be carried out in different ways. For instance, the valve element can be exposed to radial forces. By way of example, a series of pistons may be placed longitudinally within the valve housing and so arranged that they can be pressed against the valve element as its end is abraded. Another possibility is to constrict the end of the valve element by means of a steel wire or a chain wrapped around it or by using clamping jaws.

From GB-A-642 070 a valve usable for varying the size of the jet from the nozzle of a fire hose or controlling or metering the flow of fluid passing through a pipeline is known in which a thimble or dome shaped member of rubber having an opening in its end is so constrained between guiding surfaces that the opening can be enlarged or reduced by pushing or pulling on the free end of the member by means of a piston.

The valve member does not have an inner side directly facing the flow passage and this prior art device does thus not limit exposure to wear to the valve member and is thereby not suitable for abrasive fluids.

In a preferred embodiment the first end of the valve element is engaged by a first valve seat having a substantially radial supporting surface whereas the second end of the valve element is engaged by a second valve seat with an internal sloping surface to provide said constriction by inward deflection of said second end, one of said first and second valve seat being stationary with respect to said housing whereas the other is axially movable. This is obtained by axial displacing the valve element and one of the valve seats with respect to each other until the desired back pressure is achieved. The desired flow area of the valve element can be kept constant, even if the flowing liquid or gas abrades the valve element heavily. If the second valve seat is axially movable by means of a hydraulic driving unit the second end of the valve element will be deflected inwardly and as the deflected parat of the valve element is worn down, the second valve seat are moved further towards the inlet end to keep a constant back pressure resulting in more of the valve element being deflected inwards, thus keeping a constant inner diameter or passage. This process can go on until the entire deflectable portion of the valve element is worn out. The length of the deflectable part of the valve element is merely a funcion of the desired safety margin.

The hydraulic driving unit for the second valve seat may comprise at least two hydraulic cylinders positioned in rotational symmetry around the axis of the valve element and each having a cylinder jacket and a working piston connected to said first and second valve seats, respectively. Thereby, an offset pull will be neutralized and, in addition, the movement of the hydraulic cylinders can be controlled easily.

In an advantageous embodiment the hydraulic driving unit is arranged between an outer wall of the valve housing and an internal cylindrical wall surrounding the valve element. Thus the choke valve can be placed as a unit within the well bore, and, in addition, the hydraulic driving unit is well protected.

In another advantageous embodiment the constriction means comprises a flexible substantially tubular body engaging the external side of the valve element substantially throughout the axial length thereof and divided into a number of compartments which are individually inflatable by fluid pressure to constrict the valve element in a constriction zone inside any of said compartments. Thus the end of the valve element is kept constricted by directing the pressure along the element as its end is worn.

To prevent dirt being accumulated in the valve during its production, shipment and storage, its inlet and outlet orifices may be provided with means for protecting said valve element in its unstressed condition.

In the first preferred embodiment mentioned above the protecting means may comprise membranes arranged at said inlet and outlet joints and being adapted to be torn at a preset fluid pressure. For the other advantageous embodiment mentioned above an undisturbed flow through the valve when it is not in use may be allowed by protecting means comprising a membrane covering the internal surface of the valve element and adapted to be torn by an abrasive fluid passing through the valve.

In addition the flow can also be tested even all the way down to the closed position by making the protecting membrane flexible enough. As shown from the above embodiment, this protective membrane need not be burst open, but be worn open at the moment when throttling the valve is started.

To preserve the elastic properties of the valve element, the passage between the two protecting membranes may be filled with a preservative. Thus, the choke valve will always be ready to work, regardless of the fact that it may not have been working for a rather long period.

The wear-compensating, variable constriction of the throttle valve, of which the full flow diameter is up to 508 mm (20 inch) is operated hydraulically. The choke valve is capable of controlling a flow of heavily abrasive liquids or gas - from the moment when the flow is free and until it is totally stopped.

The invention also relates to off-shore drilling or production platforms either of the type which is supported by legs standing on the seabed and with a usual blow out preventer (BOP) mounted directly under the deck of the platform or in the form of semi-submersible platforms or drillships.

According to the invention an off-shore drilling or protection platform of the former type is characterized in that below the blow out preventer (BOP) a fitting is inserted having at least one curved branch, in which a flow control valve as claimed in any of claims 1 to 11 is mounted as a choke valve from which a line leads overboard the platform, and the semisubmersible or drill ship is characterized in that directly above the sea bed and the well casing housing and latch a fitting is inserted having at least one curved branch in which a flow control valve as claimed in any of claims 1 to 11 is mounted as a choke valve, from which a diverter line is leading.

In the case of a blow-out in the top hole section of the well bore, the diverter and the mud return lines are closed. The gas can now flow through the choke only. The choke control console is installed on the drill floor and is either connected to the blow out preventer (BOP) accumulator unit or to a separate hydraulic pumping unit. The console contains pressure gadgets for measuring the pressure in the annulus and the discharge lines as well as a special combination control gadget included in this invention and capable of displaying not only the floater armature but also the degree of wear on the flexible insert.

The console can also be pre-programmed to open the choke in case the back pressure exceeds a pre-calculated maximum fracture pressure.

When the heavy kill mud has entered up into the annulus, thus increasing the hydrostatic pressure, the surface back pressure can be reduced to avoid loss circulation. If the well continues to flow, the choke pressure will be kept at the maximum allowable to avoid complete depletion of the well and to allow heavy mud to be mixed and pumped into the well bore.

If the kick has been detected too late the rig personnel must continue pumping into the well with maximum pump capacity while still applying maximum allowable back pressure to the choke. At the same time, the rig crew will mix kill mud to a pre-calculated density.

The flow of gas bearing sand can be extremely abrasive and since parameters such as bottom hole pressure, fracture gradient, gas volume, sand and water contents etc. are unknown quantities it is impossible to predetermine how long the well will keep blowing. It is therefore important that the surface equipment be designed to continue the choking process for long periods under the most abrasive conditions.

The valve element can be made of a rubber compound which, on the one hand, has the ability to withstand the abrasive flow and, on the other hand, has the flexibility it takes to close the valve. As the gas and sand flow under a prolonged choking process and the flexible material is exposed in the choking orifice the back pressure will decrease. This will cause the operator to push the valve seat further against the valve element thus bringing more flexible material into the choking orifice, with a subsequent constriction of the orifice. This will increase the back pressure. Uneven wear on the inside of the flexible element such as channeling has little or no effect on the efficiency of the choke. The valve seat and other vital metal parts are protected against wear by the valve element.

The elastic valve element may have cast grooves extending concentrically and longitudinally on its outside thus dividing it into segments which, during a prolonged wear, help to keep the choke opening clear. The worn segments will be carried away by the flowing medium.

The valve element can be eroded continuously over the total stroke of the hydraulic cylinders and protects against prolonged flows from the well.

The choke valve does not eliminate all the risk which is involved in drilling through shallow gas zones. But it is an important alternative to the procedures available today and, furthermore, the investment only represents a fraction of the potential loss associated with the full-scale blow-out.

If attempts to stop the flow with the last kill-mud has failed the process will enter into its second phase. At that time it is necessary for the personnel to have sufficient time to mix a new batch of kill-mud, prepare to set a cement plug or to wait for a new delivery of barite or cement. Whilst this is going on, sea water is being pumped into the well bore at full capacity. At this point in time the well is most likely blowing gas mixed with sand and water and it may be safely assumed that the 508 mm (20 inch)/127mm (5 inch) annulus is aerated to such a degree that the hydrostatic pressure on the 508 mm (20 inch) casing shoe is only a fraction of the original pressure.

Based on this assumption, the back pressure is increased to substitute it. In theory, if the well is flowing 100% gas then the back pressure could be increased to reflect the maximum allowable pressure on the 508 mm (20 inch) casing shoe. Since there is no exact way to determine the actual hydrostatic pressure on the casing shoe, it is necessary to make an estimate based on the visual judgement of the gas-/water/sand mix which flows from the well.

Flowing gas mixed with sand will wear down any existing diverter lines in a few minutes. By using this choke valve, combined with densit lines housing spittings and piping, the choking process can go on for a long time.

The choke valve can be installed in combination with the existing diverter. This system, hovever, does not normally allow a smooth flow from the well head to the oil bore line. This can cause successive wear in places as well as blocked up lines with subsequent uncontrolled increase in back pressure. Another installation mode is to install the choke on a special mud flow below the existing diverter system. This system will then only be installed when drilling this particular section of the hole. As a new feature, the flow can be diverted on the sea floor. This is done by installing the mud cross-shaped fitting and choke on the subsea well head. The well head is then controlled through the raising of the kill line. The risen choke line can be used to monitor the annulus pressur and the control parts on the upper marine riser package can be used to function the valve. As an additional feature the inside of all pipings and fittents can be coated with densit (trade mark).

Other and further objects of the present invention will be apparent from the following description and claims and are illustrated in the accompanying drawings which by way of illustration schematically show preferred embodiments of the present invention and the principles thereof and what now are considered to be the best modes contemplated for applying these principles. Other embodiments of the invention embodying the same or equivalent principles may be used and structural changes may be made as desired by those skilled in the art without departing from the present invention and the scope of the appended claims. In the drawings

Fig. 1 shows as an embodiment of a flow control valve according to the invention a view of a choke valve in partial axial cross-section;

Fig. 2 shows a cross-section of the choke valve according to II-II of Fig. 1;

Fig. 3 shows a longitudinal cross-section as in Fig. 1, however with the valve in a working condition;

Fig. 4 shows an end view of the choke valve of Fig. 1;

Fig. 5 shows a typical surface arrangement of an off-shore oil or gas well whilst drilling in the upper strata;

fig. 6 shows a horizontal section of the arrangement according to VI-VI of Fig. 5;

Fig. 7 shows a cross-section of another choke valve embodying the flow control valve according to the invention;

Fig. 8 shows a jack-up drilling rig and a semi-submersible platform, both platforms having drilled into a shallow gas bearing formation which communicates to deeper gas sand through a fault;

Fig. 9 shows a pressure/depth diagram reflecting the pressure steps used in a typical kill procedure with emphasis on use of this diverter choke;

Fig. 10 shows a choke valve mounted on an existing diverter system;

Fig. 11 shows a choke valve mounted on a double outlet mud cross-shaped fitting below the existing diverter system;

Fig. 12 shows a choke valve and mud cross-shaped fitting mounted on a subsea well head with the lower marine riser packet mounted on top for use on-drill ships and semi-submersibles;

Fig. 13 shows a hydraulic steering or controlling system for steering/controlling the movement of a valve seat;

Fig. 14 shows a control and scale unit for the hydraulic steering system;

Fig. 15 shows a hydraulic system for the valve illustrated in Fig. 7; and

Fig. 16 shows an embodiment of the invention with the flow being by-passed throught the choke valve back to the drilling pipe/spacer spool.

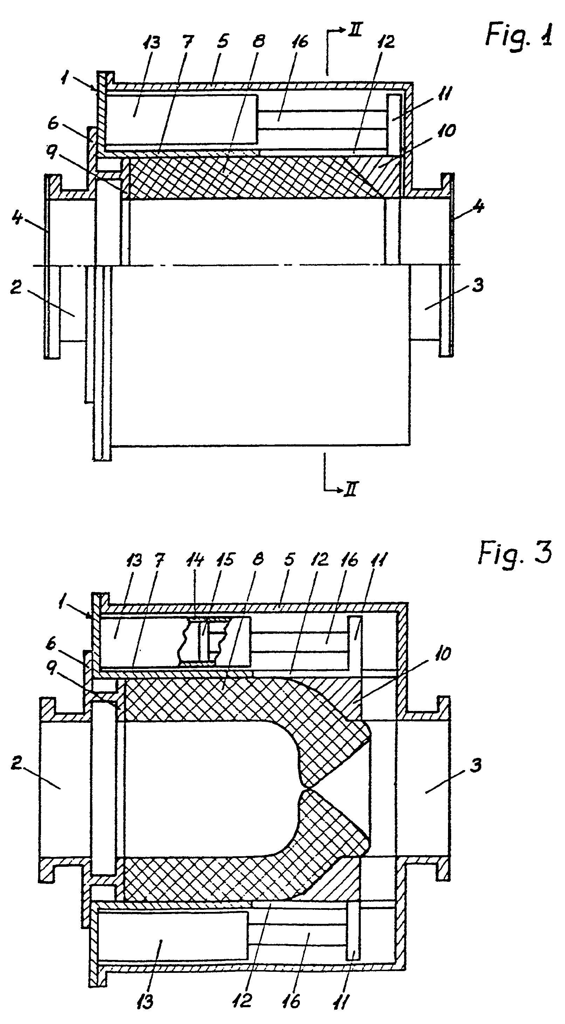

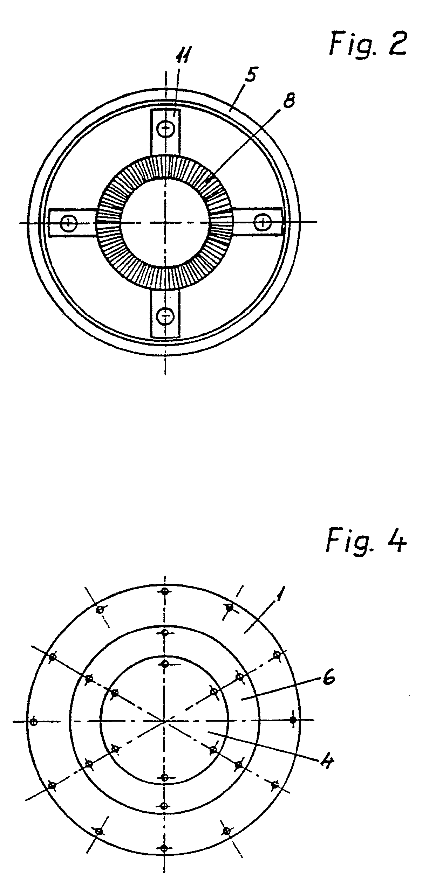

A choke valve as illustrated in Fig. 1 - 4 of the drawings comprises a cylindrical jacket 1 with an inlet and an outlet joint 2, 3 fitted with flanges which, as may be taken from Fig. 1, can be covered by protective membranes 4 as long as the valve is not in operation. In the embodiment shown the valve housing comprises three parts, viz. an exterior jacket 5 firmly combined with the outlet joint 3, an interior part 6 firmly combined with the inlet joint 2 and an intermediate part which forms a cylindrical wall 7 defining the flow passage between the two joining ends 2, 3 and which is formed integral with jacket 1.

Internally, and along an essential part of its length, the wall 7 houses a flexible tubular valve element 8 with a flat first end resting against a support 9, which is firmly combined with the interjacent part 6 of the valve housing, and another conical end which co-operates with a valve seat 10 or with a contracting piston. The interior and the exterior surfaces of these are flush with the exterior and interior sides of the tubular valve element 8 when the valve is fully open as shown in Fig. 1.

The valve seat 10 is equipped with radially protruding flaps 11, e.g. four such wings passing through axial slits 12 in the wall 7, and with a corresponding number of hydraulic driving units 13, which are positioned in the annular space between the walls 5 and 7. The cylinder 14 of the driving unit is supported by the intermediate part of the valve housing and its piston 15 is connected to the corresponding flap 11 by a piston rod 16.

In the position shown in Fig. 1, the pressure medium, via hoses not shown, can be supplied to the piston 15 on the side of the piston rod 16 and by this cause the valve seat 10 to move to the left of the drawing. As the tubular valve element is firmly supported by the supporting wall 9, the displacement of the valve seat will squeeze the right end of the tubular element 8 to take up the position shown in Fig. 1, with the flow passage through the valve totally closed. However, the valve seat element 10 is adjustable to any position between those shown in the drawing, so that the passage remains more or less open and thus controls the liquid flow in any desired manner.

The constricted zone formed by the inwardly bent end of the valve element 8 is exposed to considerable abrasion, but this wear will be compensated for by gradually displacing the valve seat 10 axially against the valve element 8. Therefore, such an adjustment for wear can be carried out until the valve seat 10 has reached its outermost position, i.e. only limited by the length of each of the hydraulic cylinders' strokes.

The flexibility of the tubular valve element 8 can be improved by axial grooves distributed over its inner surface and its outside can have circumferential weakening grooves, which indicate "clear" constriction zones as the abrasion proceeds and results in a successive destruction of the material of the valve element.

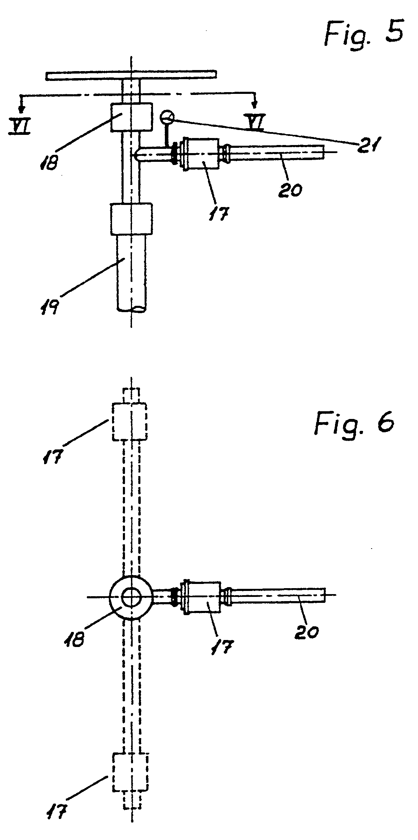

Fig. 5 shows a typical surface arrangement of an off-shore oil or gas well drilling mounted with the choke valve 17 described above. In case it is necessary to air the well because of an inflow of gas from the strata drilled a diverter 18 is closed. By this the pressure in the well 19 increases until the protective membrane 4 of the choke valve is torn and the drilling liquid flows through the choke valve and the divertor 20. After that the drilling operator can adjust the end diameter of the valve element 8 by exerting pressure on the valve seat 10 by means of the hydraulic driving unit 13 and with it regulate the back pressure in the well to a pre-calculated maximum pressure which is read from a manometer 21. The dotted line in Fig. 6 indicates an alternative mounting of two choke valves, one on either side of the well.

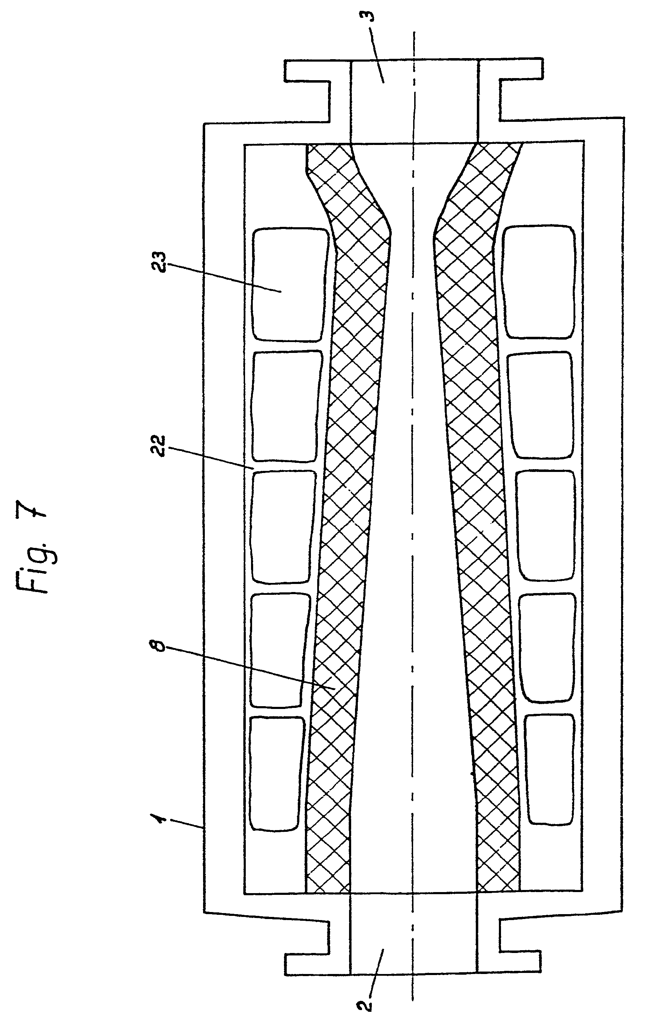

In Fig. 7 of the drawing another embodiment of a choke valve according to the invention is shown. The reference numerals used for certain parts correspond to the same parts in Fig. 1. Between the valve housing 1 and the valve element 8, a flexible element extending over the total or nearly the total length of the valve element is positioned. That flexible element is divided into a series of separate chambers 23 to which fluid (liquid or gas) can be supplied under pressure. By adjusting the pressures in the individual chambers the valve element can assume the shape shown in the figure, which consequently means a gradual constriction towards the outlet end of the valve. As this end of the valve element wears down, the pressure in the outermost chamber at this end will be reduced, whereas the pressure will be increased in the next chamber to constrict the worn-down end of the valve element and so on.

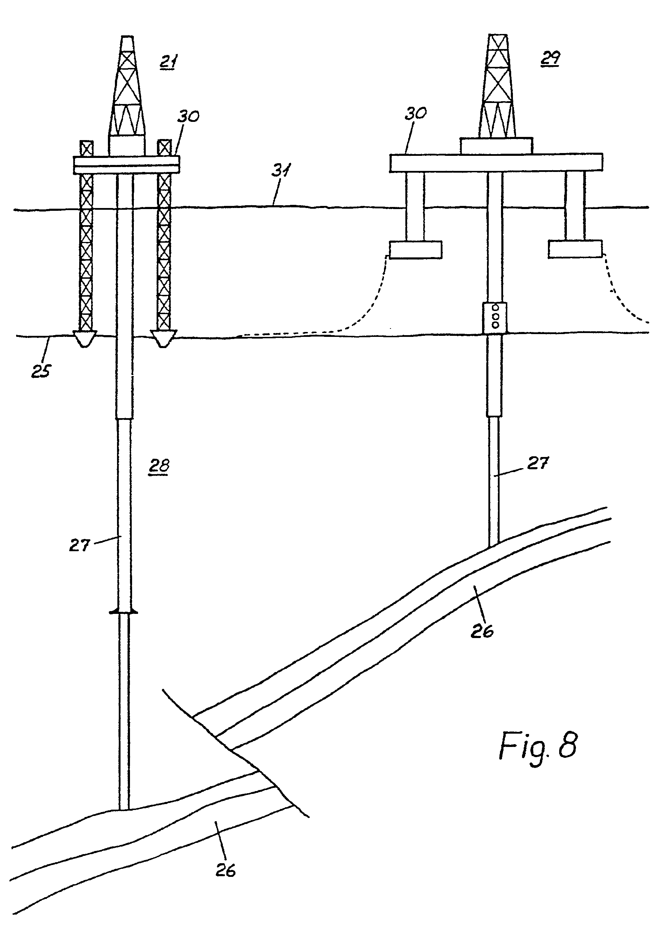

On the left-hand side of Fig. 8 there is shown a drilling platform 24 of the so-called jack-up type, i.e. a drilling platform supported by legs standing on the sea bed 25. It is illustrated that while drilling a shallow gas zone 26 is hit. In this case, it will not involve any especially critical situation, as one will not hit the shallow gas zone till after establishing the 508 mm (20 inch) casing 27. In this case, the casing 28 will be able to resist the forces occurring when the well bore is closed with the usual blow out preventers (BOPs).

To the right of the drawing a far more critical situation is illustrated, viz. where the shallow gas zone 26 is penetrated from a semi-submersible drilling platform 29, while establishing the 508 mm (20 inch) casing 27, which zone 26, due to geological displacements of the strate, is placed higher. When working under normal conditions, i.e. applying hitherto known technique there is no technically useful solution to this critical situation and one can only hope for good luck. As mentioned earlier, a closing of the well bore will entail a great risk of breaking the casing 28 and the surrounding geological formation, so that gas under high pressure will leak up through the formation. Irrespective of a jack-up 24 or a semi-submersible rig 29 being available, these are equally hazardous. As to the jack-up 24 the ground under the legs will be eroded so much that the platform may turn over. As regards the semi-submersible platform 29 the water will be aerated so that the platform loses its buoyancy.

Utilizing the present invention it is now possible to throttle the drilling under conditions so well controlled that there is a possibility of re-establishing the backpressure, thus regaining control of the drilling.

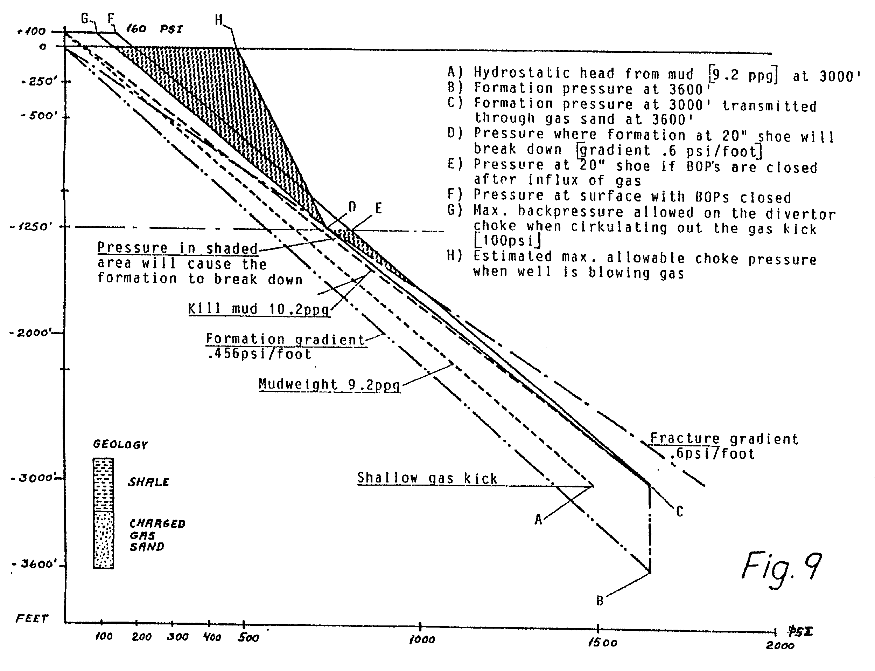

Fig. 9 of the drawing illustrates the pressure conditions of a drilling which penetrates a gas-bearing sand stratum - a so-called shallow gas zone 26. The horizontal axis indicates the pressure (psi) and the vertical axis the level (feet). The drill floor 30 is found on level + 30,48 m (+100 feet) with the water surface 31 on level 0 as starting point. The sea bed 25 is found on level -76,2 m (-250 feet). On level -914,4 m (-3000 feet) the drilling penetrates a shallow gas zone 26.

The extreme point of the curve A indicates the hydrostatic head of the well bore immediately before the kick with a drill sludge, the volume weight of which is 1,1 kg/l (9.2 ppg). The extreme point of the curve V gives the formation pressure on level -1097 m (-3600 feet), which is the underside of the shallow gas zone 26. Eased on geological measurings carried out earlier, the formation gradient is indicated as 10,3 MPa/m (456 psi/foot). C indicates the formation pressure at the upper side of the shallow gas zone on level -914,4 m (-3000 feet ). The pressure is like that on level 1097 m (-3600 feet), the gas pressure being constant within the shallow gas zone 26.

D indicates the pressure at the 508 mm (20 inch) casing shoe, where the geological formation will break down. The 508 mm (20 inch) casing shoe is at a depth of level -381 m (-1250 feet).

E indicates the pressure at the 508 mm (20 inch) casing shoe, if the blow out preventers (BOPs) are closed after gas has penetrated the well bore.

F indicates the pressure at the drill floor 30 with the blow out preventer (BOP) closed. G indicates the maximum permissible back pressure on the divertor when the gas kick is circulated out.

H indicates the estimated maximum permissible pressure in the throttle valve when gas flows out of a well bore.

Curve I indicates the pressure of a kill sludge having a volume weight of 1,22 kg/l (10.2 ppg).

The pressure in the hatched field exceeds the strength of the formation and will make it break down with the risk of losing the drilling platform and the well bore, as described previously.

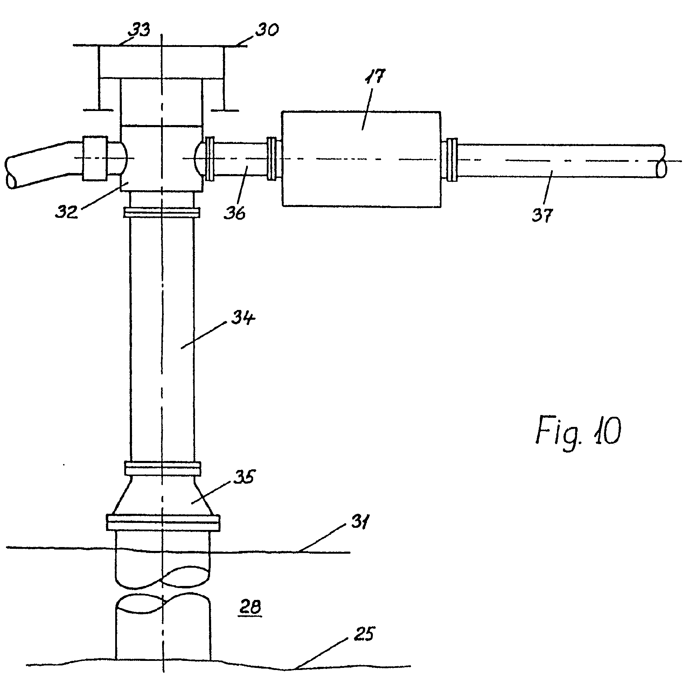

In Fig. 10 the choke valve 17 is shown being used in connection with an ordinary divertor 32. Reference numeral 30 indicates the drill floor, and 33 indicates the rotary table. Otherwise the drilling platform is of the jack-up type. A diverter of the conventional design is placed immediately below the rotary table 33. Between a divertor 32 and a casing pipe 28 there is a spacer tube 34 with a Braden head 35 for connecting the casing pipe 28. One outlet pipe of the diverter is used for the return drilling sludge and is connected to a usual stop valve. The other outlet 36 of the diverter is conducted overboard from the platform by a diverter pipe. The choke valve 17 is positioned in the immediate vicinity of the diverter 32. In the case of a kick the diverter is closed and the choke valve 17 is adjusted to the maximum permissible back pressure until the hydrostatic head is re-established.

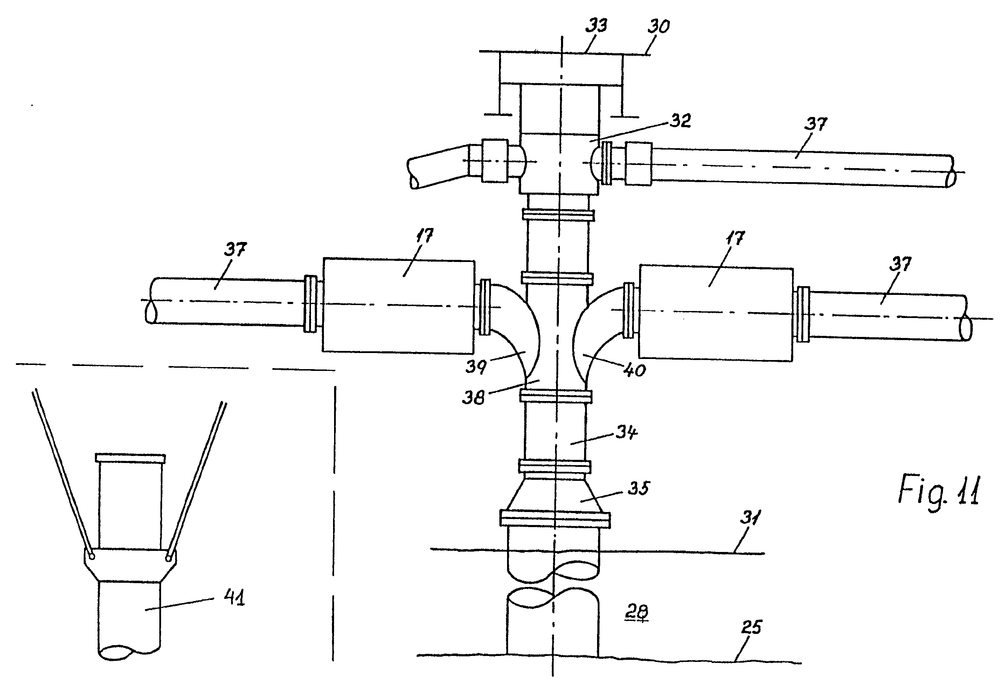

Fig. 11 shows another embodiment. Instead of inserting the choke valve 17 into the diverter pipe 37, a fitting is inserted into the spacer tube 34, said tube having two branches which are curved softly in the flow direction. By this, abrasion will be reduced substantially in proportion to the effect of a sudden change of the flow direction - such as takes place in an ordinary diverter. In the immediate vicinity of the branchings 39, 40 each of these is equipped with a choke valve 17 according to the invention, the outlet of which valves are conducted overboard from the platform by means of diverter lines 37. Placing them in this manner is very advantageous as regards conducting the pipes of the diverter line 37 as regularly as possible. Because of the entire design of the platform, the pipeline from the usual diverter 37 placed immediately under the rotary table 33 has essentially more changes of direction compared to the lower placing shown in Fig. 11.

It is obvious that the design described above can just as well be used in connection with a semisubmersible platform or with a drilling ship, in which case the construction will be mounted on top of a telescopic junction 41 between the diverter 32 and the casing pipe 28. The telescopic junction is shown quite schematically to the left in Fig. 11.

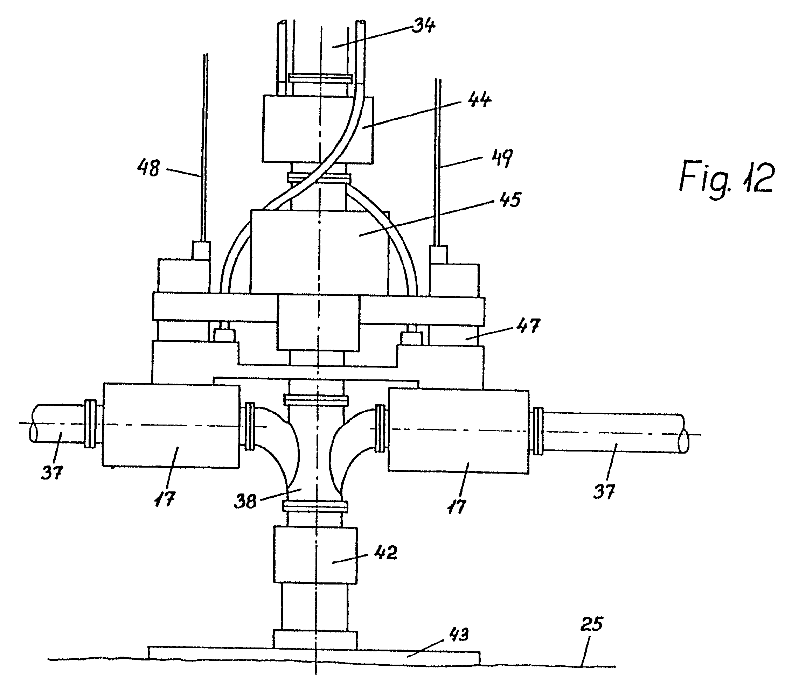

Fig. 12 illustrates a design quite different from the previous ones, as here the gas from the shallow gas zone is conducted immediately above the sea bed 25 instead of being conducted at the water surface 31.

The choke valves 17 and the branching device 38 are positioned immediately above the sea bed 25, the device 38 being connected to the top of the casing by means of a Braden head. Reference numeral 43 indicates a baseplate for the casing pipes. Above the branching device 38 follow in succession a Braden head 44, a blow out preventer (BOP) 45 and a flexible junction for the pipe 34 up to the submersible drilling platform or to the drilling ship.

Reference numeral 47 illustrates controlling devices for the choke valves 17 and the blow out preventer (BOP). Reference numerals 48, 49 indicate connecting lines to said control device, so that it can be operated from the drilling platform.

The outlets from the choke valve 17 can be conducted freely in the direction and distance desired, e.g. in the direction of the prevailing current of the sea, so that the escape from the drilling is carried away from there, thus reducing the risk of aerating the water under the rig or the drilling ship.

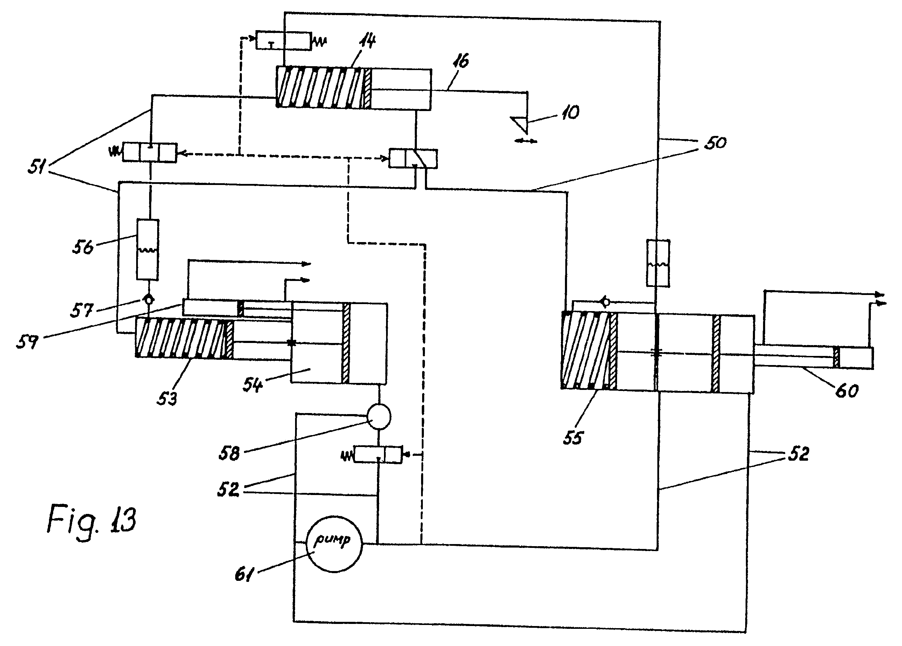

In Fig. 13 a hydraulic control system for controlling/ steering the movement of the valve seat 10 within the choke valve 17 is illustrated. The valve seat 10 is the component which bends the end of the valve element 8 and presses the latter into the passage of the valve, thus choking the flow of gas and liquid.

The hydraulic operating cylinder 14 can be activated by two separate hydraulic systems. The first system 50 can move the valve seat 10 over is total stroke. The other system 51 can move the valve seat over its total length of operation.

A control system selects between the two systems 50, 51 going out from a predetermined maximum pressure in a driving system 52 which corresponds to the rise of pressure taking place in the first system 50, when the valve seat 10 hits the valve element 8. When said pressure is reached, the control valves automatically shift to the other system 51.

Besides, a manual system eneables the operator to shift/switch between said two systems.

When the operating cylinder 14 reaches its bottom position, which is the position in which the piston rod 16 is totally out of the cylinder 14, the hydraulic flow direction will automatically be turned to opposite direction.

The other hydraulic system 51 comprises a spring-operated cylinder 53 and it only has oil on the spring-loaded side of the piston, said piston being operated by another hydraulic cylinder 54.

The spring-actuated cylinder 53 has a volume which corresponds to the quantity of oil needed to move the operating cylinder 10 over the length of one working stroke.

A spring-actuated hydraulic cylinder 55 in the firstsystem 50 has a volume which is needed to move the operating cylinder 10 one full stroke length.

By the other system 51 the operating cylinder 10 soaks oil to a tank 56. At the return stroke of the cylinder 53, caused by the spring actuation, oil is sucked from the tank 56 to the cylinder 53 through a one-way valve 57.

It should be notified that all the valves are shown in a position corresponding to the first system 50.

When the valve seat 10 hits the valve element 8, the pressure of the driving system 52 rises, by which all the valves shift to a position for the other system 51.

The stroke length of the operating cyulinder is controlled by the valve 57. By opening said valve the stroke length is increased, and by throttling the valve the stroke is reduced. When the valve is closed the length of the stroke is maintained.

The two cylinders 59 and 60 are slave sylinders showing the respective positions of the cylinders. These signals are transmitted to a reading scale on a control panel.

The steering system shown has the advantage that the choke valve can be controlled completely with one single hand lever. At the same time there is information concerning the wear of the valve element, and thus it is possible to estimate how long the choke valve will still be reliable in function.

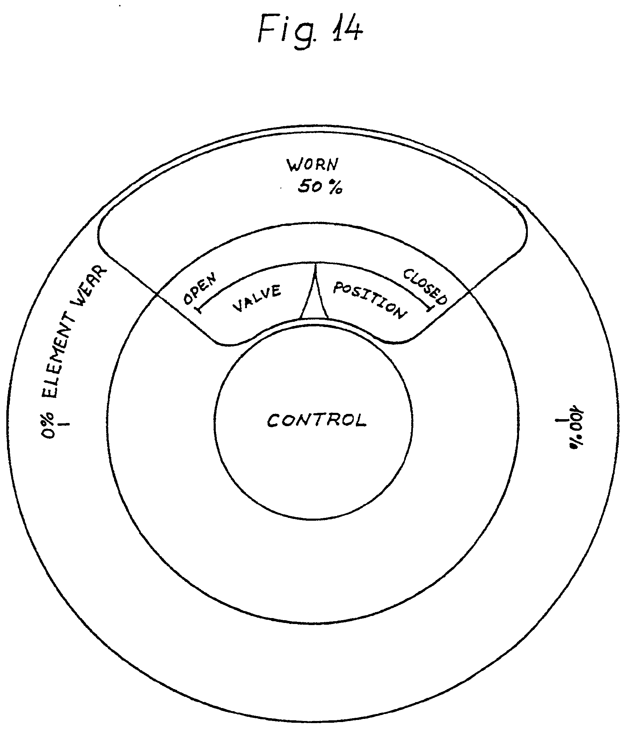

A control and scale unit is whown in Fig. 14.

For the sake of completeness it should be mentioned that a reference number 61 indicates a hydraulic pump.

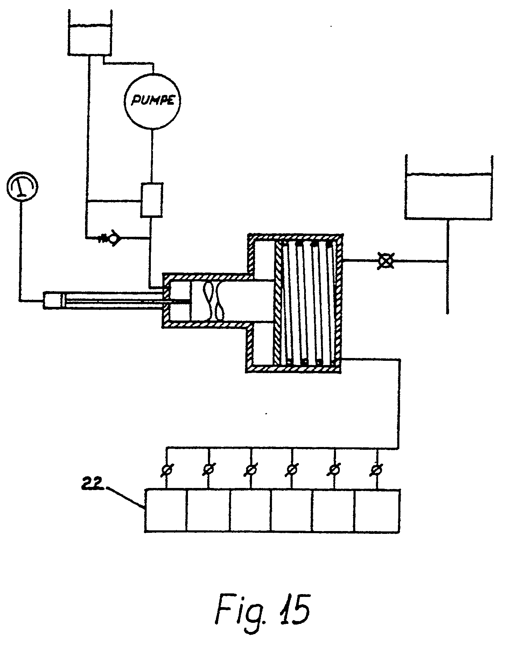

Fig. 15 quite schematically illustrates a hydraulic system for the valve shown in Fig. 7. The single chambers pressing the valve element into the flow passage of the valve can vbe set under pressure by a series of valves.

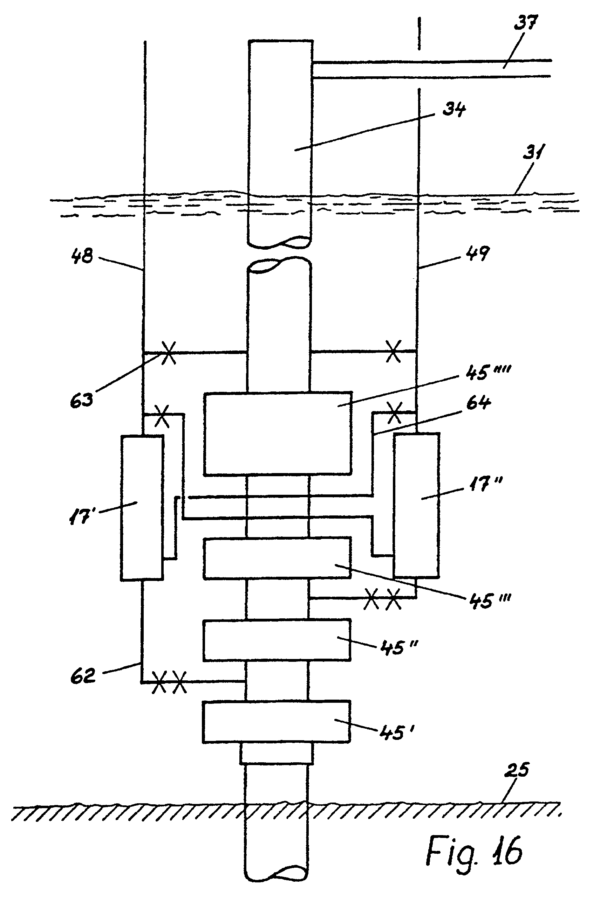

The embodiment of the invention shown in Fig. 16 is similar to that shown in Fig. 12. However, the flow from the shallow gas zone conducted from the choke valve 17 into the spacer spool 34. In other words the flow may by-pass a spherical blow out preventer (BOP 45)"" and a RAM/blow out preventer (BOP) 45"". In Fig. 16 the same reference numerals are used as in the foregoing for identical parts. In the figure "x" indicates valves. It is to be understood that the branching device 38 is similar to that shown in Fig. 11 and 12 and can be used to connect the different pipes. When, for example, the flow is diverted through the choke valve 17', a RAM/blow out preventer (BOP) 45" is closed and two valves on a pipe 52 are opened. Further, a valve on a pipe 63 is also opened leading the flow into the spacer spool 34. A pipe 48 defines the normal choke line and a pipe 49 the normal kill line. A choke valve 17' is operated through kill line 49, the valve in a pipe 64 being opened. This arrangement ca, of couse, also be applied to the embodiments shown in Fig. 10 and 11.

Even though the valve is described especially in connection with shallow gas blow-outs from oil or gas wells, it is obvious that the employment of the valve is not limited to this special field. For instance, it is very suitable for all arrangements in which the choke valve is passed by heavily abrasive liquids or gas.

It has to be taken into consideration that the well control plan for shallow gas blow-outs is not exact science which can be used for deeper blow-outs, in which the casing shoe allows for much higher pressure readings. There are no exact equations or computer programmes which can be used to calculate the weight of kill-mud, pump strokes, and choke pressure required to discharge (circulate out) the incoming gas.

The margin between control and catastrophe is small and good timing and training of the personnel is critical.

Shallow gas moves to the surface so fast that it has often surprised the drilling crew by sending the kelly bushing flying into the air. At this critical moment it is important to know that the back-up tool is available.

By using this choke valve in connection with a well-trained crew the platform will have a second chance, which is otherwise not available on today's drilling rigs.

**Claims**

1. A flow control valve for use in a pipeline for abrasive fluids, in particular as an emergency choke valve for controlling the flow volume and back pressure of liquid or gas in case of gas kicks or blow-outs when drilling through shallow gas bearing formations from an off-shore drilling platform, comprising a valve housing (1) with inlet and outlet joints (2,3) for connection with pipe line sections, a resiliently deformable cylindrical valve element (8) arranged in said housing with a first end facing said inlet joint (2) and a second end facing said outlet joint (3) and means acting on the external side of said valve element (8) to provide a controlable radial constriction in a constriction zone at said second end of the valve element (1) for reducing the flow area of the valve, the valve element (8) being substantially tubular in its unstressed condition and being arranged in the valve housing (1) with its inner side directly facing the flow passage, **characterized** in that in said unstressed condition the valve element has an internal diameter (8) providing throughout its axial length a flow area at least equal to the remaining flow area of the valve and that means is provided for controlling said constriction means to displace said constriction zone axially towards said first end of the valve element to compensate for wear of said second end of the valve element when constricted.

2. A flow control valve as claimed in claim 1 **characterized** in that the first end of the valve element is engaged by a first valve seat (9) having a substantially radial supporting surface whereas the second end of the valve element (8) is engaged by a second valve seat (10) with an internal sloping surface to provide said constriction by inward deflection of said second end, one of said first and second valve seat (9, 10) being stationary with respect to said housing (1) whereas the other is axially movable.

3. A flow control valve as claimed in claim 2 **characterized** in that said second valve seat (10) is axially movable by means of a hydraulic driving unit (13).

4. A flow control valve as claimed in claim 3 **characterized** in that the hydraulic driving unit (13) is arranged between an outer wall (5) of the valve housing and an internal cylindrical wall (7) surrounding the valve element (8).

5. A flow control valve as claimed in claim 4 **characterized** in that said hydraulic driving unit (13) comprises at least two hydraulic cylinders positioned in rotational symmetry around the axis of the valve element (8) and each having a cylinder jacket (10) and a working piston (15) connected to said first (9) and second (10) valve seats respectively.

6. A flow control valve as claimed in claim 1, **characterized** in that said constriction means comprises a flexible substantially tubular body (8) engaging the external side of the valve element (1) substantially throughout the axial length thereof and divided into a number of compartments (23) which are individually inflatable by fluid pressure to constrict the valve element in a constriction zone inside any of said compartments (23).

7. A flow control valve as claimed in claim 6 **characterized** in that said control means is operated to inflate said compartments (23) to provide a gradually increasing constriction of said valve element from said first end (2) towards said second end (3) thereof.

8. A flow control valve as claimed in any of the preceeding claims **characterized** by means for protecting said valve element in its unstressed condition.

9. A flow control valve as claimed in claim 8 **characterized** in that said protecting means comprises membranes (4) arranged at said inlet (2) and outlet (3) joints and being adapted to be torn at a preset fluid pressure.

10. A flow control valve as claimed in claim 9, **characterized** in that the passage between said protecting membranes is filled with a preservation for the valve element (8).

11. A flow control valve as claimed in any of claim 6 and 7 and claim 8 **characterized** in that said protecting means comprises a membrane covering the internal surface of the valve element (8) and adapted to be torn by an abrasive fluid passing through the valve.

12. An off-shore drilling or production platform (21) supported by legs standing on the sea bed with a usual blow out preventer (BOP) mounted directly under the deck (30) of the platform, **characterized** in that below the blow out preventer (BOP) a fitting (38) is inserted having at least one curved branch (39, 40) in which a flow control valve as claimed in any of claims 1 to 11 is mounted as a choke valve (17) from which a line (37) leads overboard the platform.

13. A semi-submersible off-shore drilling platform or a drill ship **characterized** in that directly above the sea bed (25) and the well casing housing and latch (42, 43) a fitting (38) is inserted having at least one curved branch (39, 40) in which a flow control valve (17) as claimed in any of claims 1 to 11 is mounted as a choke valve, from which a diverter line (37) is leading.

## Patentansprüche

1. Druckflussregler zur Verwendung in einer Rohrleitung für Flüssigkeiten mit Scheuerwirkung, insbesondere als ein Notdrosselventil zum Regulieren der Durchflussmenge und des Gegendruckes von Flüssigkeit oder Gas, Gasrückstössen während Bohren durch seichte, gashaltige Schichten von einer ablandigen Bohrplattform, oder plötzlichem, unkontrolliertem Ausblasen von Gas, umfassend ein Ventilgehäuse (1) mit Einlass- und Ablaufstutzen (2, 3) zur Verbindung mit Rohrleitungsabschnitten, ein in dem Gehäuse angeordnetes elastisch deformierbares, zylindrisches Ventilelement (8) mit einem dem Einlasstutzen (2) zugekehrten ersten Ende und einem dem Ablaufstutzen (3) zugekehrten zweiten Ende, sowie auf der Aussenseite des Ventilelements (8) tätige Mittel, die zwecks Verminderung des Strömungsquerschnittes des Ventils an dem zweiten Ende des Ventilelements (1) in einer Verengungszone eine Einschnürung bilden, wobei das Ventilelement (8) in unbelastetem Zustand im wesentlichen röhrförmig ausgebildet und mit der Innenseite direkt der Durchflussöffnung zuwendend in dem Ventilgehäuse (1) angebracht ist, dadurch **gekennzeichnet**, dass das Ventilelement in unbelastetem Zustand einen inneren Diameter (8) aufweist, der durch die gesamte axiale Länge des Ventilelements einen Durchflussquerschnitt erzeugt, der mit dem übrigen Durchflussquerschnitt des Ventils zumindest gleich ist, und dass zum Regulieren der Einschnürungsmittel Mittel vorgesehen sind, die zwecks Kompensation für den Verschleiss des zweiten Ventilelements in eingeengtem Zustand die Einengungszone in Richtung zum ersten Ende des Ventilelements axial verschieben.

2. Druckflussregler nach Anspruch 1, dadurch **gekennzeichnet**, dass das erste Ende des Ventilelements mit einem ersten Ventilsitz (9) mit einer im wesentlichen radialen Stützfläche in Eingriff steht, während das zweite Ende des Ventilelements (8) mit einem eine inwendige schräge Fläche aufweisenden zweiten Ventilsitz (10) in Eingriff steht, um durch nach einwärts Abbiegen des zweiten Endes die Verengung herzustellen, wobei mit Bezug auf das Gehäuse (1) einer von dem ersten und zweiten Ventilsitz (9, 10) stationär ist, während der andere axial verschiebbar ist.

3. Druckflussregler nach Anspruch 2, dadurch **gekennzeichnet**, dass der zweite Ventilsitz (10) mittels einer hydraulischen Antriebseinheit (13) axial verstellbar ist.

4. Druckflussregler nach Anspruch 3, dadurch **gekennzeichnet**, dass die hydraulische Antriebseinheit (13) zwischen einer Aussenwand (5) des Ventilgehäuses und einer das Ventilelement (8) umschliessenden inneren zylindrischen Wand (7) angeordnet ist.

5. Druckflussregler nach Anspruch 4, dadurch **gekennzeichnet**, dass die hydraulische Antriebseinheit (13) mindestens zwei Hydraulikzylinder umfasst, die rotationssymmetrisch um die Achse des Ventilelements (8) angebracht sind, und jeder eine Zylinderwandung (14) und einen Arbeitskolben (15) aufweisen, die an den ersten (9) bzw. zweiten (10) Ventilsitz angeschlossen sind.

6. Druckflussregler nach Anspruch 1, dadurch **gekennzeichnet**, dass die Einengungsmittel einen flexiblen, im wesentlichen rohrförmigen Körper (8) umfassen, der im wesentlichen über der gesamten axialen Länge in die Aussenseite des Ventilelements (1) eingreift und in eine Anzahl Kammern (23) geteilt ist, die durch Flüssigkeitsdruck einzeln aufgeblasen werden können, um das Ventilelement in einer Einschnürungszone innerhalb einer beliebigen dieser Kammern (23) einzuengen.

7. Druckflussregler nach Anspruch 6, dadurch **gekennzeichnet**, dass das Regulierungsorgan zu einem Aufblasen der Kammern (23) und damit zu einer gradweise zunehmenden Einschnürung des Ventilelements von seinem ersten Ende (2) in Richtung zu dessem zweiten Ende (3) betätigt wird.

8. Druckflussregler nach einem der vorhergehenden Ansprüche, **gekennzeichnet** durch Mittel zum Schutz des Ventilelements in dessen unbelastetem Zustand.

9. Druckflussregler nach Anspruch 8, dadurch **gekennzeichnet**, dass die Schutzmittel bei den Einlass- (2) und Ablaufstutzen (3) angeordnete Membranen (4) umfassen, die bei einem voraus festgesetzten Flüssigkeitsdruck zerrissen werden.

10. Druckflussregler nach Anspruch 9, dadurch **gekennzeichnet**, dass die Passage zwischen den Schutzmembranen mit einem Konservierungsmittel für das Ventilelement (8) gefüllt ist.

11. Druckflussregler nach einem der Ansprüche 6 und 7 und Anspruch 8, dadurch **gekennzeichnet**, dass das Schutzmittel eine die Innenfläche des Ventilelements (8) deckende Membran umfasst, die von einer durch das Ventil strömenden Flüssigkeit mit Scheuerwirkung zerrissen wird.

12. Ablandige, durch Pfähle auf dem Meeresgrund gestützte Bohr- oder Produktionsplattform (21) mit einem direkt unter dem Plattformdeck (30) montierten üblichen Ausbruchsventil (BOP), dadurch **gekennzeichnet**, dass unter dem Ausbruchsventil eine Armatur (38) mit mindestens einer gekrümmten Abzweigung (39, 40) eingesetzt ist, in welche ein nach einem der Ansprüche 1 bis 11 als ein Drosselventil (17) tätiger Druckflussregler montiert ist, wovon eine Leitung (37) überbord der Plattform führt.

13. Halbtauchfähige, ablandige Bohrplattform oder Bohrschiff, dadurch **gekennzeichnet**, dass direkt über dem Meeresgrund (25) und dem Bohrlochgehäuse und der Verriegelung (42, 43) eine Armatur mit mindestens einer gekrümmten Abzweigung (39, 40) eingesetzt ist, in welche ein nach einem der Ansprüche 1-11 gekennzeichneter Druckflussregler (17) als ein Drosselventil montiert ist, wovon eine Ablenkleitung (37) führt.

**Revendications**

1. Valve de commande de débit pour emploi dans une canalisation pour fluides abrasifs, en particulier en tant que valve d'étranglement pour commande de débit et de pression de retour de liquide ou de gaz en cas d'à-coups ou de soufflage de gaz lors du forage dans des formations gazéifères peu profondes à partir d'une plate-forme de forage off-shore, comportant un boîtier de valve (1) avec joints d'entrée et de sortie (2, 3) pour liaison avec des sections de canalisation, un élément cylindrique de valve (8) élastiquement déformable, disposé dans ledit boîtier, avec une première extrémité faisant face audit joint d'entrée (2) et une seconde extrémité faisant face audit joint de sortie (3), et des moyens agissant sur la face externe dudit élément de valve (8) pour permettre une contraction radiale règlable dans une zone de contraction à ladite seconde extrémité de l'élément de valve (1) pour réduire la section d'écoulement de la valve, l'élément de valve étant, à l'étant non-contraint, essentiellement tubulaire et étant disposé, dans le boîtier de valve, avec sa face interne tournée directement vers le passage d'écoulement, caractérisée en ce que à l'état non-contraint l'élément de valve offre un diamètre interne (8) assurant sur toute sa longueur axiale une section d'écoulement au moins égale au reste de la section d'écoulement de la valve et en ce qu'elle comporte des moyens de commande desdits moyens de contraction pour déplacer ladite zone de contraction axialement vers ladite première extrémité de la valve pour compenser l'usure à ladite seconde extrémité de la valve lorsqu'il y a contraction.

2. Valve de commande de débit selon la revendication 1, caractérisée en ce que la première extrémité de l'élément de valve est portée par un premier siège de valve (9) présentant une surface d'appui essentiellement radiale, la seconde extrémité de l'élément de valve (8) étant portée par un second siège de valve (10) présentant une surface interne inclinée pour assurer ladite contraction par déflexion de la dite seconde extrémité vers l'intérieur, un desdits premier et second sièges de valve (9, 10) étant stationnaire par rapport audit boîtier (1), tandis que l'autre est mobile axialement.

3. Valve de commande de débit selon la revendication 2, caractérisée en ce que ledit second siège de valve (10) est rendu axialement mobile à l'aide d'un ensemble de commande hydraulique (13).

4. Valve de commande de débit selon la revendication 3, caractérisée en ce que l'ensemble de commande hydraulique (13) est disposé entre une paroi externe (5) du boîtier de valve et une paroi interne cylindrique (7) entourant l'élément de valve (8).

5. Valve de commande de débit selon la revendication 4, caractérisée en ce que ledit ensemble de commande hydraulique (13) comprend au moins deux vérins hydrauliques situés en positions symétriques par rapport à l'axe de l'élément de valve (8) et comportant chacun un corps cylindrique (14) et un piston de travail (15), lesquels sont reliés respectivement auxdits premier et second sièges (9, 10) de valve.

6. Valve de commande de débit selon la revendication 1, caractérisée en ce que lesdits moyens de contraction comportent un corps flexible, essentiellement tubulaire (8), en appui contre la face externe de l'élément de valve (1) sur essentiellement toute la longueur axiale de celui-ci, et divisé en un nombre de compartiments (23) séparément gonflables sous la pression d'un fluide pour contracter l'élément de valve dans une zone de contraction dans l'un quelconque desdits compartiments (23).

7. Valve de commande de débit selon la revendication 6, caractérisée en ce que lesdits moyens de commande sont commandés pour gonfler lesdits compartiments (23) afin d'obtenir une contraction dudit élément de valve augmentant progressivement depuis ladite première extrémité (2) vers ladite seconde extrémité (3) de l'élément de valve.

8. Valve de commande de débit selon une quelconque des revendications précédentes, caractérisée par des moyens de protection de l'élément de valve à l'état non-contraint.

9. Valve de commande de débit selon la revendication 8, caractérisée en ce que lesdits moyens de protection sont constitués par des membranes (4) situées auxdits joints d'entrée (2) et de sortie (3) et conçues pour se rompre à une pression de fluide prédéterminée.

10. Valve de commande de débit selon la revendication 9, caractérisée en ce que le passage entre lesdites membranes protectrices est rempli par une protection de l'élément de valve (8).

11. Valve de commande de débit selon une des revendications 6 et 7 et la revendication 8, caractérisée en ce que lesdits moyens de protection sont constitués par une membrane recouvrant la face interne de l'élément de valve (8) et conçue pour se rompre sous l'effet d'un fluide abrasif passant à travers la valve.

12. Plate-forme de forage ou production offshore supportée par des jambes reposant sur le fond de la mer, avec dispositif anti-soufflage usuel (BOP) monté directement sous le pont (30) de la plate-forme, caractérisée en ce que sous le dispositif anti-soufflage (BOP) est inséré un raccord (38) présentant au moins une branche incurvée (39, 40) dans laquelle est située une valve de commande de débit selon une quelconque des revendications 1 à 11, formant valve d'étranglement (17) à partir de laquelle une canalisation (37) conduit hors de la plate-forme.

13. Plate-forme semi-submersible de forage offshore ou navire de forage, caractérisée en ce que directement au-dessus du fond de la mer (25) et du chemisage de puits et du dispositif de fermeture (42, 43) est inséré un raccord (38) présentant au moins une branche incurvée (39, 40) dans laquelle est située une valve de commande de débit (17) selon une quelconque des revendications 1 à 11, formant valve d'étranglement à partir de laquelle s'étend une canalisation de diversion (37).

Fig. 1

Fig. 3

13

Fig. 2

Fig. 4

Fig. 5

18

VI        VI

21

17

20

19

Fig. 6

17

18        17        20

17

Fig. 7

Fig. 8

160 PSI

A) Hydrostatic head from mud [9.2 ppg] at 3000'
B) Formation pressure at 3600'
C) Formation pressure at 3000' transmitted through gas sand at 3600'
D) Pressure where formation at 20" shoe will break down [gradient .6 psi/foot]
E) Pressure at 20" shoe if BOP's are closed after influx of gas
F) Pressure at surface with BOPs closed
G) Max. backpressure allowed on the divertor choke when cirkulating out the gas kick [100psi]
H) Estimated max. allowable choke pressure when well is blowing gas

Pressure in shaded area will cause the formation to break down

Kill mud 10.2ppg

Formation gradient .456psi/foot

Mudweight 9.2ppg

Fracture gradient .6psi/foot

Shallow gas kick

GEOLOGY

SHALE

CHARGED GAS SAND

Fig. 9

FEET

+100, 0, -250', -500', -1250', -2000', -3000', -3600'

100  200  300  400  500  1000  1500  2000  PSI

Fig. 10

Fig. 11

EP 0 199 669 B1

Fig. 12

Fig. 13

# Fig. 14

WORN 50%

0% ELEMENT WEAR

OPEN VALVE POSITION CLOSED

100%

CONTROL

Fig. 15

Fig. 16